# EUROPÄISCHE PATENTSCHRIFT

(11) **EP 2 702 681 B1**
(45) Veröffentlichungstag und Bekanntmachung des Hinweises auf die Patenterteilung: **10.06.2015**
(21) Anmeldenummer: 12718148.5
(22) Anmeldetag: 20.04.2012
(51) Int. Cl.: H02P 6/14, H02P 6/18

(54) **VERFAHREN ZUR SENSORLOSEN KOMMUTIERUNGSERKENNUNG VON ELEKTRONISCH KOMMUTIERTEN ELEKTROMOTOREN**
METHOD FOR THE SENSORLESS COMMUTATION DETECTION OF ELECTRONICALLY COMMUTATED ELECTRIC MOTORS
PROCÉDÉ DE DÉTECTION DE COMMUTATION SANS CAPTEUR DE MOTEURS ÉLECTRIQUES COMMUTÉS ÉLECTRONIQUEMENT

(30) Priorität: 26.04.2011 DE 102011017517
(43) Veröffentlichungstag der Anmeldung: 05.03.2014
(73) Patentinhaber: Robert Bosch GmbH, 70442 Stuttgart (DE)
(72) Erfinder: DWERTMANN, Ingo, 76137 Karlsruhe (DE)
(86) Internationale Anmeldenummer: PCT/EP2012/057291
(87) Internationale Veröffentlichungsnummer: WO 2012/146541

(56) Entgegenhaltungen:
- EP-A1- 0 801 463
- DE-A1-102007 024 354
- DE-A1-102007 040 217
- US-A1- 2009 066 278
- US-A1- 2010 079 909

## Beschreibung

Die Erfindung bezieht sich auf ein Verfahren zur sensorlosen Kommutierungserkennung von elektronisch kommutierten Elektromotoren.

### Stand der Technik

Bei elektronisch kommutierten Gleichstrom-Elektromotoren wird das magnetische Drehfeld, welches für die Drehbewegung erforderlich ist, von einer Elektronik gesteuert. Die Kommutierungszeitpunkte sind von der Rotorposition des Motors abhängig und können entweder sensorisch erfasst oder über die Messung der Gegeninduktionsspannung bestimmt werden. Zur Detektierung der Nulldurchgänge werden Komparatoren eingesetzt, die Auswertung der Komparatorsignale erfolgt über Mikrocontroller.

Zur Detektierung des Nulldurchgangs ist es erforderlich, die zugehörige Phase für einen definierten Zeitraum nicht zu bestromen, um eine Überdeckung der induzierten Spannung zu vermeiden. Diese sogenannte Austastlücke, während der nicht bestromt wird, muss groß genug gewählt werden, um in verschiedenen Betriebszuständen des Motors eine Überdeckung der induzierten Spannung auszuschließen. Bei größeren Austastlücken werden jedoch Geräusch und Leistung beeinträchtigt.

Aus der EP 0 801 463 A1 ist ein Verfahren zur Detektierung eines Nulldurchgangs der Gegeninduktionsspannung bei Stromunterbrechung bei einem elektronisch kommutierten Motor bekannt. Mit Unterbrechung des Phasenstroms sinkt die Gegeninduktionsspannung ab und weist einen Nulldurchgang auf. Beginnend mit dem Nulldurchgang der Gegeninduktionsspannung wird eine variable Verzögerung gewählt, die von der Motorgeschwindigkeit abhängt. Die variable Verzögerung bezieht sich auf den Zeitraum zwischen dem Nulldurchgang und dem Ende des Austastzeitraums.

Die DE 10 2007 040 217 A1 bezieht sich auf den sensorlosen Betrieb einer elektronisch kommutierten Gleichstrommaschine. Für die Rotorpositionsbestimmung wird der Nulldurchgang der induzierten Spannung mittels eines Komparators bestimmt. Es wird eine Schrittzeit zwischen aufeinanderfolgenden Nulldurchgängen bestimmt, die mit einer minimalen Schrittzeit verglichen wird, welche von der Motordrehzahl abhängt.

### Offenbarung der Erfindung

Der Erfindung liegt die Aufgabe zugrunde, mit einfachen Maßnahmen die elektronische Kommutierung in Elektromotoren zu optimieren. Es soll insbesondere die sensorlose Kommutierungserkennung so verbessert werden, dass keine Leistungseinbußen entstehen.

Diese Aufgabe wird erfindungsgemäß mit den Merkmalen des Anspruches 1 gelöst. Die Unteransprüche geben zweckmäßige Weiterbildungen an.

Mittels des erfindungsgemäßen Verfahrens ist eine sensorlose Kommutierungserkennung von elektronisch kommutierten Elektromotoren, insbesondere Gleichstrom-Elektromotoren möglich. Um störende Einflüsse bei der Kommutierungserkennung aufgrund eines noch fließenden Phasenstromes auszuschließen bzw. zu minimieren, wird für einen Austastzeitraum der Phasenstrom unterbrochen, so dass die Gegeninduktionsspannung (Back-EMF bzw. BEMF) nach dem Abklingen des Phasenstroms ohne Spannungsüberlagerung vorliegt. Das Verfahren eignet sich zur dynamischen Längenoptimierung bzw. Minimierung der Austastlücke bei elektronisch kommutierten Elektromotoren.

Der grundsätzliche Verlauf der induzierten Spannung des Motors ist an sich bekannt, so dass nach dem Abklingen der Bestromung auf den Nulldurchgang geschlossen werden kann. Nulldurchgang bedeutet in diesem Zusammenhang nicht zwingenderweise ein Nullpotenzial, sondern schließt auch den Durchgang der induktiven Spannung durch Mittelpotenziale ein. Im Fall von drei Strangspannungen in Form eines Sterns ist das Mittelpotenzial dasjenige des Sternpunktes, welches der halben Versorgungsspannung entspricht.

Der Nulldurchgang kann beispielsweise mittels Komparatoren ermittelt werden. Das Ausgangssignal (BEMF-Signal) des Komparators wird zum Beispiel mittels eines Mikrocontrollers ausgewertet.

Um den Austastzeitraum, in welchem der Phasenstrom unterbrochen ist, so gering wie möglich zu halten und damit insbesondere die Leistung des Elektromotors zu verbessern, aber auch das entstehende Geräusch zu verringern, wird innerhalb des Austastzeitraums aus dem Verlauf der Gegeninduktionsspannung ein das Abklingen des Phasenstroms kennzeichnender Abklingzeitpunkt ermittelt und der Beginn des Austastzeitraums als Funktion der Zeitdifferenz zwischen diesem Abklingzeitpunkt und dem Ende des Austastzeitraums bestimmt. Der Austastzeitraum ist demzufolge durch drei Zeitpunkte gekennzeichnet, nämlich dem Beginn des Austastzeitraums, zu dem die Abschaltung des Phasenstroms erfolgt, dem Ende des Austastzeitraums, bei welchem der Phasenstrom wieder eingeschaltet wird, und einem zwischenliegenden Abklingzeitpunkt innerhalb des Austastzeitraums, bei dem der Phasenstrom nach dem Abschalten bis unter einen Grenzwert abgeklungen ist.

Beim erfindungsgemäßen Verfahren wird der Austastzeitraum, also die Zeitdifferenz zwischen dem Beginn und dem Ende des Austastzeitraums, so kurz wie möglich gehalten. Dies wird erreicht, indem die Zeitdifferenz zwischen dem Abklingzeitpunkt und dem Ende des Austastzeitraumes bestimmt und der Beginn des Austastzeitraumes als Funktion dieser Zeitdifferenz ermittelt wird, so dass der Austastzeitraum minimiert wird.

Bei dem erfindungsgemäßen Verfahren ist somit der Austastzeitraum nicht konstant, sondern wird vielmehr fortlaufend variabel bestimmt bzw. aktualisiert, so dass den System- bzw. Umgebungsbedingungen wie zum Beispiel Temperatur und Spannung oder sonstigen Betriebszuständen Rechnung getragen werden kann und zugleich der Austastzeitraum durch die variable Anpassung so kurz wie möglich gehalten wird. Ermöglicht wird dies, indem der Beginn des Austastzeitraums variabel eingestellt wird.

Gemäß einer zweckmäßigen Ausführung ist vorgesehen, dass der Beginn des Austastzeitraums vorgezogen wird, falls die Zeitdifferenz zwischen dem Abklingzeitpunkt und dem Ende des Austastzeitraums gegenüber einem Referenzwert verringert ist. In diesem Fall ist die Zeitdifferenz zu klein und es muss der Beginn des Austastzeitraums - welcher mit dem Abschaltzeitpunkt zusammenfällt - auf einen vorgezogenen, früheren Zeitpunkt verschoben werden. Dagegen wird der Beginn des Austastzeitraums auf einen späteren Zeitpunkt verschoben, falls die Zeitdifferenz zwischen dem Abklingzeitpunkt und dem Ende des Austastzeitraums - dem Wieder-Einschaltzeitpunkt des Phasenstroms - gegenüber einem Referenzwert vergrößert ist. Es steht somit sowohl für den Fall einer verringerten Zeitdifferenz als auch für den Fall einer vergrößerten Zeitdifferenz ein Instrumentarium zur Anpassung des Austastzeitraums unter Berücksichtigung der aktuellen Zustands- bzw. Systembedingungen zur Verfügung.

Der Referenzwert, der dem Vergleich mit der Zeitdifferenz zwischen Abklingzeitpunkt und Ende des Austastzeitraums zugrunde liegt, stellt zweckmäßigerweise eine Systemgröße bzw. -funktion dar, welche jedoch von der Drehzahl des Elektromotors abhängt. In Abhängigkeit der aktuellen Drehzahl ändert sich der Referenzwert, insbesondere in der Weise, dass der Referenzwert mit der Drehzahl ansteigt bzw. abfällt. Der Zusammenhang zwischen dem Referenzwert und der Drehzahl des Elektromotors ist linear.

Grundsätzlich denkbar ist auch eine Abhängigkeit von weiteren Zustands- bzw. Betriebsgrößen des Elektromotors, beispielsweise von der Temperatur.

Der Referenzwert kann sowohl als absolute als auch als relative Größe vorgegeben werden. Im Falle einer absoluten Größe handelt es sich bei dem Referenzwert wie vorbeschrieben um einen systemspezifischen Wert, der gegebenenfalls von einer Zustands- bzw. Kenngröße des Elektromotors, insbesondere der Drehzahl des Motors abhängt. Im Falle einer relativen Größe kann der Referenzwert von dem Wert aus dem vorangegangen Berechnungszyklus abhängen, wobei relative Abweichungen, die einen definierten Prozentsatz überschreiten, zu einer Anpassung des Beginns des Austastzeitraumes führen, wohingegen relative Abweichungen unterhalb des prozentualen Schwellenwertes zu keiner Anpassung führen, so dass der Beginn des Austastzeitpunkts unverändert bleibt.

Auch der Wert, um den der Beginn des Austastzeitraums auf einen vorgezogenen bzw. späteren Zeitpunkt verschoben wird, kann auf verschiedene Weisen ermittelt werden. Gemäß einer einfachen Ausführung ist vorgesehen, dass der Beginn des Austastzeitraumes um einen konstanten Betrag verschoben wird. Gemäß einer alternativen, vorteilhaften Ausführung ist dagegen vorgesehen, dass der Beginn des Austastzeitraums um einen veränderlichen Betrag verschoben wird, welcher insbesondere als Funktion der Zeitdifferenz zwischen dem Abklingzeitpunkt und dem Ende des Austastzeitraums bestimmt wird. Beispielsweise kann der Betrag, um den der Beginn des Austastzeitraums verschoben wird, als Bruchteil der Zeitdifferenz zwischen dem Abklingzeitpunkt und dem Ende des Austastzeitraums ermittelt werden.

Das Verfahren läuft zweckmäßigerweise in einem Regel- bzw. Steuergerät ab, welches dem Elektromotor zugeordnet ist. Unter den Begriff "Elektromotor" sollen auch elektrische Maschinen fallen, die als Generatoren eingesetzt werden.

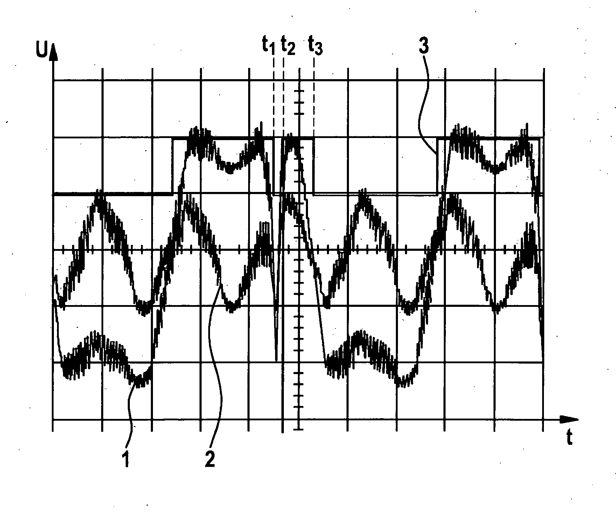

Weitere Vorteile und zweckmäßige Ausführungen sind den weiteren Ansprüchen, der Figurenbeschreibung und der Zeichnung zu entnehmen, die ein Schaubild mit dem zeitabhängigen Verlauf der Strangspannung, der Sternpunktspannung sowie des BEMF-Signals in der Bestromung eines Elektromotors zeigt.

In dem Schaubild sind drei Kurvenverläufe mit Spannungswerten dargestellt, die bei der Bestromung eines elektronisch kommutierten Elektromotors auftreten. Die Kurve 1 stellt die Strangspannung in einer Sternschaltung zur Stromversorgung des Elektromotors dar, die Kurve 2 die Sternpunktspannung und die Kurve 3, welche die Form eines Rechtecksignals hat, das BEMF-Signal, das mittels eines Komparators ermittelt werden kann, wobei das BEMF-Signal 3 als Ausgangssignal am Komparator anliegt, dem als Eingangssignal die Strangspannung 1 und die Sternpunktspannung 2 zugeführt werden.

Zur sensorlosen Kommutierungserkennung muss der Nulldurchgang der induzierten Spannung ermittelt werden, was anhand des BEMF-Signals 3 erfolgt. Da während der Bestromung das BEMF-Signal 3 durch Überlagerung mit dem Phasenstrom gestört ist, muss der Phasenstrom für einen Austastzeiträum unterbrochen werden, was zum Zeitpunkt t₁ erfolgt, der somit den Beginn des Austastzeitraums markiert. Nach dem Abschalten der Bestromung muss jedoch, um Störungen des BEMF-Signals 3 auszuschließen, noch das Abklingen des Stroms abgewartet werden. Zum Abklingzeitpunkt t₂ ist der Phasenstrom hinreichend abgeklungen, so dass keine signifikanten Störungen im Verlauf des BEMF-Signals 3 mehr auftreten. Somit stellt der Zeitraum zwischen dem Abklingzeitpunkt t₂ und dem Ende t₃ des Austastzeitraums die Phase dar, in der das BEMF-Signal 3 unbeeinflusst vom Phasenstrom ist.

Der Zeitpunkt t₃ markiert das Ende des Austastzeitraums, bei dem ein Nulldurchgang vorliegt, was anhand der Flanke des BEMF-Signals 3 detektiert werden kann. Mit dem Ende des Austastzeitraums zum Zeitpunkt t₃ wird der Phasenstrom wieder eingeschaltet.

Um den Austastzeitraum zwischen den Zeitpunkten t₁ und t₃ so kurz wie möglich zu halten, wird der Beginn t₁ des Austastzeitraums variabel auf einen vorgezogenen, früheren Zeitpunkt bzw. auf einen späteren Zeitpunkt verschoben. Die Entscheidung, ob eine Verschiebung stattfindet und wenn ja, in welche Richtung, hängt von der Zeitdifferenz Δt zwischen dem Abklingzeitpunkt t₂ und dem Ende t₃ des Austastzeitraums ab. Falls die Zeitdifferenz gegenüber einem Referenzwert verringert ist, wird der Beginn t₁ des Austastzeitraums auf einen früheren Zeitpunkt vorgezogen. Ist dagegen die Zeitdifferenz Δt zwischen t₂ und t₃ gegenüber einem Referenzwert vergrößert, wird der Beginn t₁ auf einen späteren Zeitpunkt gelegt. Der Referenzwert, welcher für den Vergleich mit der Zeitdifferenz Δt herangezogen wird, ist vorteilhafterweise eine systemspezifische Funktion, die von der Drehzahl des Elektromotors abhängt.

Die Höhe der Verschiebung des Beginns t₁ des Austastzeitraums wird vorteilhafterweise variabel festgelegt und insbesondere als Funktion der Zeitdifferenz Δt zwischen t₂ und t₃ bestimmt, beispielsweise als fester Bruchteil der Zeitdifferenz Δt.

## Patentansprüche

1. Verfahren zur sensorlosen Kommutierungserkennung von elektronisch kommutierten Elektromotoren, bei dem zur Detektierung des Nulldurchgangs der Phasenstrom für einen Austastzeitraum unterbrochen wird, wobei der Beginn (t1) des Austastzeitraums auf den Zeitpunkt der Stromunterbrechung und das Ende (t3) des Austastzeitraums auf den Zeitpunkt der Stromeinschaltung fällt, wobei aus dem Verlauf der Gegeninduktionsspannung (3) ein das Abklingen des Phasenstroms kennzeichnender Abklingzeitpunkt (t2) innerhalb des Austastzeitraums ermittelt wird, **dadurch gekennzeichnet, dass** der Beginn (t1) des Austastzeitraums als Funktion der Zeitdifferenz (Δt) zwischen dem Abklingzeitpunkt (t2) und dem Ende (t3) des Austastzeitraums bestimmt wird, wobei der Beginn (t1) des Austastzeitraums auf einen vorgezogenen Zeitpunkt verschoben wird, falls die Zeitdifferenz (Δt) zwischen dem Abklingzeitpunkt (t2) und dem Ende (t3) des Austastzeitraums gegenüber einem Referenzwert verringert ist bzw. der Beginn (t1) des Austastzeitraums auf einen späteren Zeitpunkt verschoben wird, falls die Zeitdifferenz (Δt) zwischen dem Abklingzeitpunkt (t2) und dem Ende (t3) des Austastzeitraums gegenüber einem Referenzwert vergrößert ist.

2. Verfahren nach Anspruch 1, **dadurch gekennzeichnet, dass** der Referenzwert von der Drehzahl des Elektromotors abhängt.

3. Verfahren nach Anspruch 1 oder 2, **dadurch gekennzeichnet, dass** der Referenzwert aus der Zeitdifferenz (Δt) zwischen dem Abklingzeitpunkt (t₂) und dem Ende (t₃) des Austastzeitraums aus einem vorangegangenen Berechnungszyklus gebildet wird.

4. Verfahren nach einem der Ansprüche 1 bis 3, **dadurch gekennzeichnet, dass** der Beginn (t₁) des Austastzeitraums um einen Betrag verschoben wird, der als Funktion der Zeitdifferenz (Δt) zwischen dem Abklingzeitpunkt (t₂) und dem Ende (t₃) des Austastzeitraums bestimmt wird.

5. Verfahren nach Anspruch 4, **dadurch gekennzeichnet, dass** der Betrag, um den der Beginn (t₁) des Austastzeitraums verschoben wird, als Bruchteil der Zeitdifferenz (Δt) zwischen dem Abklingzeitpunkt (t₂) und dem Ende (t₃) des Austastzeitraums bestimmt wird.

6. Regel- bzw. Steuergerät zur Durchführung des Verfahrens nach einem der Ansprüche 1 bis 5.

7. Elektromotor, insbesondere in einem Fahrzeug bzw. einem Aggregat in einem Fahrzeug, mit einem Regel- bzw. Steuergerät nach Anspruch 6.

## Claims

1. Method for sensorless commutation identification in electronically commutated electric motors, in which the zero crossing is detected by interrupting the phase current for a blanking period, wherein the beginning (t₁) of the blanking period occurs at the time of the current being interrupted and the end (t₃) of the blanking period occurs at the time of the current being switched on, wherein the profile of the mutual induction voltage (3) is used to ascertain a decay time (t₂) - denoting the decay in the phase current - within the blanking period, **characterized in that** the beginning (t₁) of the blanking period is determined as a function of the time difference (Δt) between the decay time (t₂) and the end (t₃) of the blanking period, wherein the beginning (t₁) of the blanking period is shifted to a prior time if the time difference (Δt) between the decay time (t₂) and the end (t₃) of the blanking period is reduced in comparison with a reference value or the beginning (t₁) of the blanking period is shifted to a later time if the time difference (Δt) between the decay time (t₂) and the end (t₃) of the blanking period is increased in comparison with a reference value.

2. Method according to Claim 1, **characterized in that** the reference value is dependent on the speed of the electric motor.

3. Method according to Claim 1 or 2, **characterized in that** the reference value is formed from the time difference (Δt) between the decay time (t₂) and the end (t₃) of the blanking period from a preceding calculation cycle.

4. Method according to one of Claims 1 to 3, **characterized in that** the beginning (t₁) of the blanking period is shifted by an absolute value that is determined as a function of the time difference (Δt) between the decay time (t₂) and the end (t₃) of the blanking period.

5. Method according to Claim 4, **characterized in that** the absolute value by which the beginning (t₁) of the blanking period is shifted is determined as a fraction of the time difference (Δt) between the decay time (t₂) and the end (t₃) of the blanking period.

6. Regulator or controller for carrying out the method according to one of Claims 1 to 5.

7. Electric motor, particularly in a vehicle or a unit in a vehicle, having a regulator or controller according to Claim 6.

## Revendications

1. Procédé de détection de commutation sans contact de moteurs électriques commutés électroniquement, dans lequel pour détecter le passage à zéro, le courant de phase est interrompu pendant un intervalle de surpression, le début (t₁) de l'intervalle de suppression tombant à l'instant de l'interruption de courant et la fin (t₃) de l'intervalle de suppression tombant à l'instant de la reconnexion, un moment de déclin (t₂) caractérisant le déclin du courant de phase étant déterminé à l'intérieur de l'intervalle de suppression à partir de la courbe de tension de contre-induction (3), **caractérisé en ce que** le début (t₁) de l'intervalle de suppression est défini comme la fonction de la différence de moment (Δt) entre le moment de déclin (t₂) et la fin (t₃) de l'intervalle de suppression, le début (t₁) de l'intervalle de suppression étant décalé à un moment antérieur si la différence de moment (Δt) entre le moment de déclin (t₂) et la fin (t₃) de l'intervalle de suppression a augmenté par rapport à une valeur de référence et/ou le début (t₁) de l'intervalle de suppression est décalé à un moment postérieur si la différence de moment (Δt) entre le moment de déclin (t₂) et la fin (t₃) de l'intervalle de suppression a augmenté par rapport à une valeur de référence.

2. Procédé selon la revendication 1, **caractérisé en ce que** la valeur de référence dépend de la vitesse de rotation du moteur électrique.

3. Procédé selon la revendication 1 ou 2, **caractérisé en ce que** la valeur de référence est formée à partir de la différence de moment (Δt) entre le moment de déclin (t₂) et la fin (t₃) de l'intervalle de suppression, à partir d'un cycle de calcul antérieur.

4. Procédé selon l'une quelconque des revendications 1 à 3, **caractérisé en ce que** le début (t₁) de l'intervalle de suppression est décalé d'une valeur déterminée en fonction de la différence de moment (Δt) entre le moment de déclin (t₂) et la fin (t₃) de l'intervalle de suppression.

5. Procédé selon la revendication 4, **caractérisé en ce que** la valeur dont le début (t₁) de l'intervalle de suppression est décalé est définie comme la fraction de la différence de moment (Δt) entre le moment de déclin (t₂) et la fin (t₃) de l'intervalle de suppression.

6. Appareil de commande et de régulation servant à la mise en oeuvre du procédé selon l'une quelconque des revendications 1 à 5.

7. Moteur électrique, notamment dans un véhicule et/ou un groupe contenu dans un véhicule, avec un appareil de commande et/ou de régulation selon la revendication 6.
